# EUROPEAN PATENT SPECIFICATION

(11) **EP 3 984 774 B1**
(45) Date of publication and mention of the grant of the patent: **15.11.2023**
(21) Application number: 20822663.9
(22) Date of filing: 27.05.2020
(51) Int. Cl.: B60C 11/117, B60C 5/00, B60C 11/03, B60C 11/13

(54) **PNEUMATIC TIRE**
LUFTREIFEN
PNEUMATIQUE

(30) Priority: 14.06.2019 JP 2019110819
(43) Date of publication of application: 20.04.2022
(73) Proprietor: BRIDGESTONE CORPORATION, Chuo-ku Tokyo 104-8340 (JP)
(72) Inventor: OHSAWA Yasuo, Tokyo 104-8340 (JP)
(74) Representative: Marks & Clerk LLP
(86) International application number: PCT/JP2020/021001
(87) International publication number: WO 2020/250689

(56) References cited:
- WO-A1-2009/147047
- WO-A1-2019/027423
- FR-A2- 2 543 068
- JP-A- 2002 225 509
- JP-A- 2005 119 480
- JP-A- 2005 119 480
- JP-A- 2007 090 980
- JP-A- 2008 062 749
- JP-A- 2011 521 845
- JP-A- 2017 087 966
- JP-A- 2017 197 149
- US-A1- 2002 100 527
- US-A1- 2011 240 192
- US-A1- 2014 150 942

## Description

### TECHNICAL FIELD

The present invention relates to a pneumatic tire.

### BACKGROUND

A pneumatic tire in which drainage performance is improved by providing pin-shaped sipes on the tread surface has been proposed. For example, see Patent Literature (PTL) 1. Reference is also drawn toward Patent Literature 2 to 6 listed below.

### CITATION LIST

### Patent Literature

PTL 1: JP2009-045952A
PTL 2: US 2002/0100527 A1
PTL 3: FR 2 543 068 A2
PTL 4: US 2014/0150942 A1
PTL 5: JP 2005 119480 A
PTL 6: WO 2009/147047 A1

### SUMMARY

### (Technical Problem)

However, although the above technology can improve the drainage performance on ice, the drainage performance may not be sufficiently improved on wet road surfaces with a large amount of water, for reasons such as water absorption being easily inhibited by a curved portion.

The present invention aims to provide a pneumatic tire that can improve the drainage performance on wet road surfaces.

### (Solution to Problem)

A summary of the present invention is as follows.

A pneumatic tire according to the present invention includes at least one water absorption hole on a tread surface, wherein
the water absorption hole includes a narrow-diameter portion located on the tread surface side and a wide-diameter portion that is located on a hole bottom side and has a diameter larger than a diameter of the narrow-diameter portion,
in a reference state such that the pneumatic tire is mounted on an applicable rim, filled to a prescribed internal pressure, and under no load, the water absorption hole extends at an inclination relative to a normal direction of the tread surface,
in the reference state, an average cross-sectional area, which is an average value of a cross-sectional area of the narrow-diameter portion in a cross-section perpendicular to an extending direction of the narrow-diameter portion over an extension length of the narrow-diameter portion, is 0.2 mm² to 20 mm², and a diameter of the wide-diameter portion is 1.4 or more times a diameter of the narrow-diameter portion in the cross-section perpendicular to the extending direction of the narrow-diameter portion, and
in a transparent plan view from the tread surface side in the reference state, an opening of the narrow-diameter portion to the tread surface overlaps the wide-diameter portion.

According to the pneumatic tire of the present invention, the drainage performance on wet road surfaces can be improved.

Here, the "tread surface" refers to the entire tread surface in the tread circumferential direction that comes into contact with the road surface when the pneumatic tire is mounted on an applicable rim, filled to a prescribed internal pressure, and subjected to the maximum load.

The "tread edges" described below refer to the outermost points of the aforementioned tread surface on both sides in the tire width direction.

The "diameter of the narrow-diameter portion in the cross-section perpendicular to the extending direction of the narrow-diameter portion" refers to the diameter of a circle with the same area as the area of the cross-section when the diameter is not constant within the cross-section (when the cross-section is not circular).

The "diameter of the wide-diameter portion" refers to the diameter of a sphere with the same volume as the volume of the wide-diameter portion when the diameter is not constant (when the wide-diameter portion is not a sphere).

"Overlaps" includes the case of being in contact.

In the present specification, the "applicable rim" refers to a standard rim of an applicable size, such as the Measuring Rim in the STANDARDS MANUAL of the European Tyre and Rim Technological Organisation (ETRTO) in Europe or the Design Rim in the YEAR BOOK of the Tire and Rim Association, Inc. (TRA) in the USA, that is described, or will be described in the future, in industrial standards effective in the region where the tire is manufactured and used, such as the YEAR BOOK published by the Japan Automobile Tyre Manufacturers Association (JATMA) in Japan, the STANDARDS MANUAL of the ETRTO, and the YEAR BOOK of the TRA. (In other words, the "rim" encompasses not only current sizes but also sizes that may be included in industrial standards in the future. An example of the "size that will be described in the future" is the size described under "future developments" in the ETRTO Standards Manual 2013). In the case of a size not specified in the aforementioned industrial standards, the "rim" refers to a rim whose width corresponds to the bead width of the tire.

The "prescribed internal pressure" represents the air pressure (maximum air pressure) corresponding to the maximum load capability of a single wheel in an applicable size/ply rating described by the aforementioned JATMA or the like. In the case of a size not listed in the industrial standards, the "specified internal pressure" refers to the air pressure (maximum air pressure) corresponding to the maximum load capability prescribed for each vehicle on which the tire is mounted.

The "maximum load" refers to the load corresponding to the aforementioned maximum load capability.

In the present disclosure, "spherical" includes not only spheres but also, for example, a cross-sectional shape that is elliptical.

### (Advantageous Effect)

According to the present invention, a pneumatic tire that can improve the drainage performance on wet road surfaces can be provided.

### BRIEF DESCRIPTION OF THE DRAWINGS

In the accompanying drawings:
FIG. 1 is a developed view schematically illustrating a tread pattern of a pneumatic tire according to an embodiment of the present invention;
FIG. 2 is a plan view of a water absorption hole in an example viewed from the tread surface side (upper view) and a tread circumferential cross-sectional view of a water absorption hole in the example (lower view);
FIG. 3 is a plan view of a water absorption hole in another example viewed from the tread surface side (upper view) and a tread circumferential cross-sectional view of a water absorption hole in the other example (lower view);
FIG. 4 is a plan view of a water absorption hole in a further example viewed from the tread surface side (upper view) and a tread width cross-sectional view of a water absorption hole in the further example (lower view); and
FIG. 5 is a plan view of a water absorption hole in an additional example viewed from the tread surface side (upper view) and a tread width cross-sectional view of a water absorption hole in the additional example (lower view).

### DETAILED DESCRIPTION

Embodiments of the present invention are described below in detail with reference to the drawings.

The internal structure and the like of the pneumatic tire (hereinafter referred to simply as the tire) can be the same as those of conventional tires. As an example, the tire can have a pair of bead portions, a pair of sidewall portions connected to the pair of bead portions, and a tread portion disposed between the pair of sidewall portions. The tire can also have a carcass extending toroidally between the pair of bead portions and a belt disposed on the radially outward side of a crown portion of the carcass.

Unless otherwise specified, the dimensions and the like refer to the dimensions and the like when the tire is mounted on an applicable rim, filled to the prescribed internal pressure, and under no load (referred to as the "reference state" in the present specification).

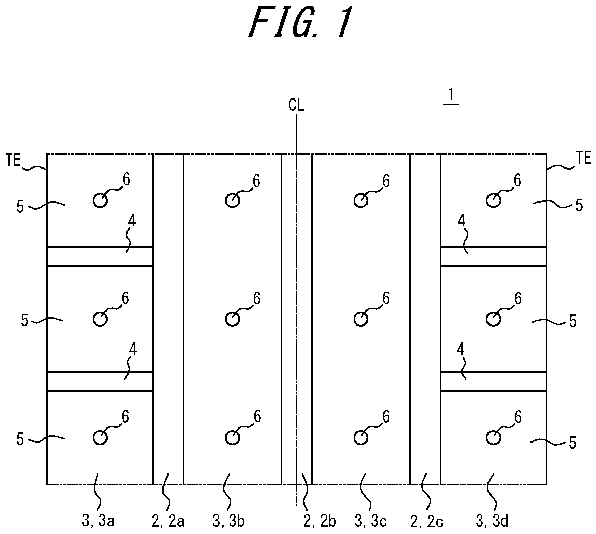

FIG. 1 is a developed view schematically illustrating a tread pattern of a pneumatic tire according to an embodiment of the present invention.

As illustrated in FIG. 1, the tire in the present example includes, on a tread surface 1, a plurality (three in the illustrated example) of circumferential main grooves 2 (2a, 2b, 2c) extending in the tread circumferential direction, and a plurality (four in the illustrated example) of land portions 3 (3a, 3b, 3c, 3d) defined by circumferential main grooves 2 adjacent in the tread width direction among the plurality of circumferential main grooves 2, or by a circumferential main groove (2a, 2c) and a tread edge TE. In the present example, one circumferential main groove 2b is positioned on the tire equatorial plane CL, and the other circumferential main grooves 2a, 2c are respectively positioned in one half and the other half, in the tread width direction, divided by the tire equatorial plane CL. In the present example, two land portions 3 are arranged in each tread widthwise half. As illustrated, the land portions 3b, 3c are land portions by the center in the tread width direction, and the land portions 3a, 3d are land portions adjacent to the tread edges TE. In the example illustrated in FIG. 1, the number of circumferential main grooves 2 is three, but the number can be two or less (0 to 2) or can be four or more. Accordingly, the number of land portions 3 can also be three or less (1 to 3), or can be five or more.

As illustrated in FIG. 1, the land portions 3a, 3d adjacent to the tread edges TE are divided into blocks 5 by a plurality of widthwise grooves 4 extending in the tread width direction (two grooves in the illustrated range). In the present example, the land portions 3b, 3c by the center in the tread width direction are thus rib-like land portions, and the land portions 3a, 3d adjacent to the tread edge TE are not rib-like, i.e., are block-shaped land portions. A "rib-like land portion" refers to a land portion that is not completely divided in the tread circumferential direction by a widthwise groove or widthwise sipe extending in the tread width direction. On the other hand, all the land portions may be rib-like land portions, or all the land portions may be block-shaped land portions. Alternatively, when some of the land portions are rib-like land portions and the remaining land portions are block-shaped land portions, as in the present example, the land portions at any position in the tread width direction may be rib-like land portions. In the land portions that include the widthwise grooves 4, the number of the widthwise grooves 4 is not particularly limited and can be determined appropriately in consideration of the negative ratio and the like.

In the illustrated example, the circumferential main grooves 2 all extend along the tread circumferential direction (without inclination) in plan view of the tread surface 1, but at least one of the circumferential main grooves 2 may extend at an inclination relative to the tread circumferential direction. In this case, the circumferential main groove 2 may be inclined at an angle of, for example, 5° or less relative to the tread circumferential direction. In the illustrated example, all of the circumferential main grooves 2 extend straight in the tread circumferential direction, but at least one of the circumferential main grooves 2 may have a shape such as a zigzag shape or a curved shape.

In the illustrated example, all of the widthwise grooves 4 extend along the tread width direction (without inclination), but at least one of the widthwise grooves 4 may extend at an inclination relative to the tread width direction.

In the illustrated example, the widthwise grooves 4 of the land portion 3a adjacent to the tread edge TE of one half in the tread width direction and the widthwise grooves 4 of the land portion 3d adjacent to the tread edge TE of the other half in the tread width direction are arranged at matching positions in the tread circumferential direction so as to overlap when projected in the tread width direction. The widthwise grooves 4 of the land portions 3 can, however, be arranged at positions shifted with respect to each other in the tread circumferential direction so as not to overlap when projected in the tread width direction.

In the illustrated example, none of the land portions 3 includes sipes. At least one of the land portions 3 can, however, be configured to include sipes. In this case, the land portions that include sipes may include widthwise sipes extending in the tread width direction, circumferential sipes extending in the tread circumferential direction, or both.

The "sipe" refers to a sipe with an opening width (an opening width measured perpendicular to the extending direction of the sipe in plan view) of 2 mm or less to the tread surface in the aforementioned reference state.

The tire of the present example illustrated in FIG. 1 has one or more water absorption holes 6 in the tread surface 1 (in the present example, 12 holes in the illustrated range). In the illustrated example, the land portions 3a, 3d adjacent to the tread edges TE and the land portions 3b, 3c by the center in the tread width direction each have one or more water absorption holes 6. On the other hand, when the tread surface 1 has one or more land portions 3, it suffices for any of the land portions 3 to have one or more water absorption holes 6, and there may be land portions having no water absorption holes 6. In the present example, each block 5 in the block-shaped land portions 3a, 3d has one or more water absorption holes 6 (one in the illustrated example), but when the block-shaped land portions 3a, 3d have water absorption holes 6, it suffices for any of the blocks to have the water absorption holes 6, and there may be blocks without water absorption holes 6.

As long as the tread surface 1 has one or more water absorption holes 6, the number of water absorption holes 6 in each land portion 3 is not particularly limited. For example, in the example illustrated in FIG. 1, each block 5 has only one water absorption hole 6 in the land portions 3a, 3d adjacent to the tread edges TE, but each block 5 or any block 5 may have a plurality of water absorption holes 6, and each block 5 or any block 5 may be configured not to have water absorption holes 6, as described above. The number of water absorption holes 6 may also differ between the blocks 5. In the example illustrated in FIG. 1, the rib-like land portions 3b, 3c by the center in the tread width direction have three water absorption holes 6 in the illustrated range, but the number of water absorption holes 6 in the rib-like land portions 3b, 3c is also not particularly limited.

In the example illustrated in FIG. 1, one water absorption hole 6 is provided in the center of each block 5 in the land portions 3a and 3d adjacent the tread edges TE, but the arrangement is not limited to this example. The water absorption hole 6 can, for example, be provided at any corner of the block 5. The position at which the water absorption hole 6 is provided can also differ between blocks 5. Furthermore, in the example illustrated in FIG. 1, each water absorption hole 6 in the land portions 3b, 3c by the center in the tread width direction is provided substantially at the tread widthwise center of the land portions 3b, 3c, but this example is not limiting. The water absorption hole 6 can, for example, be provided at a position close to one of the circumferential main grooves 2. In the present example, the water absorption holes 6 are arranged at equal intervals in the tread circumferential direction in the rib-like land portions 3b, 3c but may instead be arranged at uneven intervals. In the illustrated example, the positions at which the water absorption holes 6 are provided in the land portion 3b and the land portion 3c are aligned in the tread circumferential direction so as to overlap when projected in the tread width direction, but the positions in the tread circumferential direction at which some or all of the water absorption holes 6 are provided can differ between rib-like land portions 3. Furthermore, in the illustrated example, the positions of the water absorption holes 6 in the land portions 3a, 3d adjacent to the tread edges TE and the positions of the water absorption holes 6 in the land portions 3b, 3c by the center in the tread width direction are aligned in the tread circumferential direction so as to overlap when projected in the tread width direction, but the positions in the tread circumferential direction at which some or all of the water absorption holes 6 are provided can differ between land portions 3.

Alternatively, the water absorption holes 6 can, for example, be randomly arranged in part or all of the tread surface 1 (regardless of whether the land portions 3 of the tread surface 1 are rib-like or block-shaped land portions).

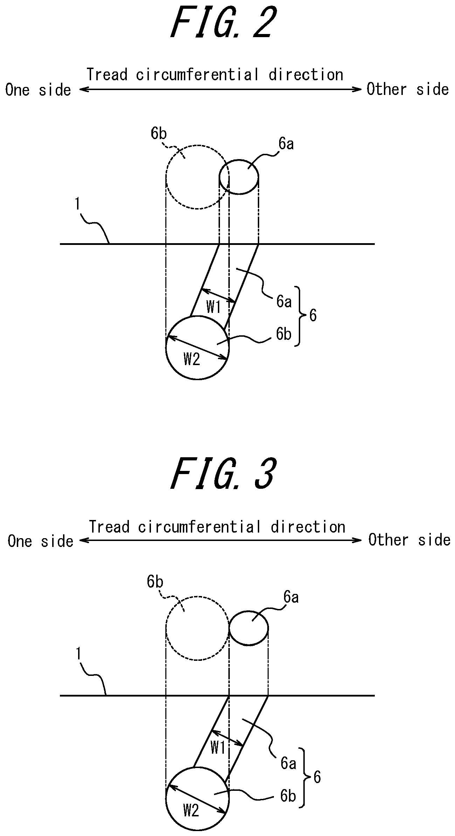

FIG. 2 is a plan view of a water absorption hole in an example viewed from the tread surface side (upper view) and a tread circumferential cross-sectional view of a water absorption hole in the example (lower view). In the upper view of FIG. 2, the opening of a narrow-diameter portion 6a (solid line) and a projected line of the outline of a wide-diameter portion 6b (dashed line) are indicated for the sake of explanation.

As illustrated in FIGS. 2 and 3, the water absorption hole 6 includes the narrow-diameter portion 6a located on the tread surface 1 side and the wide-diameter portion 6b that is located on the hole bottom side and has a diameter larger than the diameter of the narrow-diameter portion 6a. In the illustrated example, the narrow-diameter portion 6a is columnar and has a circular cross-section perpendicular to the extending direction of the narrow-diameter portion 6a. As illustrated in FIG. 1, in a plan view from the tread surface 1 side, the opening of the narrow-diameter portion 6a to the tread surface 1 is elliptical. The narrow-diameter portion 6a is not limited to this shape, however, and may be columnar with an elliptical shape in a cross-section perpendicular to the extending direction of the narrow-diameter portion 6a. Alternatively, the narrow-diameter portion 6a can be columnar with a different shape (such as a polygonal shape) in a cross-section perpendicular to the extending direction of the narrow-diameter portion 6a. In the example illustrated in FIG. 2, a diameter W1 of the narrow-diameter portion 6a in the cross-section perpendicular to the extending direction of the narrow-diameter portion 6a is constant, but the diameter W1 may vary in the extending direction of the narrow-diameter portion 6a. For example, the diameter W1 may gradually increase or decrease from the hole bottom side towards the tread surface 1 side. In the illustrated example, the wide-diameter portion 6b is spherical, and more specifically is a sphere. On the other hand, the wide-diameter portion 6b can be spherical and have an elliptical cross-section, for example, or the wide-diameter portion 6b can have a cross-sectional shaped with angular portions. In the illustrated example, the narrow-diameter portion 6a and the wide-diameter portion 6b form a dropper-like shape.

As illustrated in FIGS. 2 and 3, in the reference state such that the pneumatic tire is mounted on an applicable rim, filled to a prescribed internal pressure, and under no load, the average cross-sectional area, which is the average value of the cross-sectional area of the narrow-diameter portion 6a in a cross-section perpendicular to the extending direction of the narrow-diameter portion 6a over the extension length of the narrow-diameter portion 6a, is 0.2 mm² to 20 mm², and a diameter W2 of the wide-diameter portion 6b is 1.4 or more times the diameter W1 of the narrow-diameter portion 6a in the cross-section perpendicular to the extending direction of the narrow-diameter portion 6a.

The boundary surface between the narrow-diameter portion 6a and the wide-diameter portion 6b is defined as the surface with the smallest area that includes the boundary between the narrow-diameter portion 6a and the wide-diameter portion 6b.

The aforementioned average cross-sectional area can be obtained by, for example, dividing the volume of the narrow-diameter portion 6a by the extension length of the narrow-diameter portion 6a (the extension length of the center line of the narrow-diameter portion 6a).

Here, the extension length of the narrow-diameter portion 6a is not particularly limited, but in the case of a passenger vehicle pneumatic tire, for example, the extension length may be 1.5 mm to 5.5 mm. The groove bottom of the wide-diameter portion 6b is not particularly limited, but in the case of a passenger vehicle pneumatic tire, for example, the groove bottom is preferably located 0.5 mm to 1.5 mm outward in the tire radial direction from the groove bottom of the circumferential main groove 2, as an example. The position of the connection between the narrow-diameter portion 6a and the wide-diameter portion 6b is not particularly limited, but in the case of a passenger vehicle pneumatic tire, for example, the position is preferably 2.5 mm to 3.5 mm outward in the tire radial direction from the groove bottom of the circumferential main groove 2, as an example. The relationship between the groove depth and the aforementioned shape in the case of a passenger vehicle tire can be taken into consideration, and a similar relationship may be used, for example, for adjustment in the case of a light truck tire, a truck/bus tire, or the like.

As illustrated in FIGS. 2 and 3, the water absorption holes 6 extend at an inclination relative to the normal direction of the tread surface 1. In greater detail, the narrow-diameter portion 6a of the water absorption hole 6 extends at an inclination to the normal direction of the tread surface 1. The "normal direction" is defined as a line perpendicular to a tangent at the intersection of the center line of the water absorption hole and a virtual line, which would be present if there were no water absorption hole, of the tread surface.

In the example illustrated in FIG. 2, the water absorption holes 6 are inclined in the tire circumferential direction from the tread surface 1 side towards the hole bottom side.

In the present example, the one or more water absorption holes 6 provided in the tread surface 1 all extend at an inclination in the same direction (at the same inclination angle) relative to the normal direction of the tread surface 1.

As illustrated in FIG. 2, in a transparent plan view from the tread surface 1 side in the aforementioned reference state, the opening of the narrow-diameter portion 6a to the tread surface 1 overlaps the wide-diameter portion 6b (with an overlapping width in the example in FIG. 2).

For example, when the average cross-sectional area of the narrow-diameter portion 6a is within the above range, the opening of the narrow-diameter portion 6a to the tread surface 1 and the wide-diameter portion 6b can be adjusted to overlap by adjustment of any one or more of the extension length of the narrow-diameter portion 6a, the inclination angle of the narrow-diameter portion 6a relative to the normal direction of the tread surface 1, and the diameter of the wide-diameter portion 6b. For example, other conditions being equal, the opening of the narrow-diameter portion 6a to the tread surface 1 and the wide-diameter portion 6b can be adjusted to overlap by shortening the extension length of the narrow-diameter portion 6a to some degree. Alternatively, other conditions being equal, the opening of the narrow-diameter portion 6a to the tread surface 1 and the wide-diameter portion 6b can be adjusted to overlap by reducing the inclination angle of the narrow-diameter portion 6a relative to the normal direction of the tread surface 1 to some degree. Alternatively, other conditions being equal, the opening of the narrow-diameter portion 6a to the tread surface 1 and the wide-diameter portion 6b can be adjusted to overlap by increasing the diameter of the wide-diameter portion 6b to some degree.

The effects of the pneumatic tire according to the present embodiment are described below.

First, the pneumatic tire of the present embodiment includes one or more water absorption holes 6 on the tread surface 1, and the water absorption hole 6 includes the narrow-diameter portion 6a located on the tread surface 1 side and the wide-diameter portion 6b that is located on the hole bottom side and has a diameter larger than the diameter of the narrow-diameter portion 6a. As a result, when the water absorption hole 6 shrinks and is then restored due to rolling strain of the tire, water on the road surface can be sucked up from the narrow-diameter portion 6a on the tread surface 1 side, sent to the wide-diameter portion 6b, whose diameter on the hole bottom side is relatively larger as described above, and stored in the wide-diameter portion 6b. That is, the water absorption hole 6 can function overall as a microscopic dropper. The aforementioned shrinking and restoration are repeated by the rolling of the tire, so that water absorption can be repeated.

Furthermore, in the aforementioned reference state in the present embodiment, the average cross-sectional area, which is the average value of the cross-sectional area of the narrow-diameter portion 6a in a cross-section perpendicular to the extending direction of the narrow-diameter portion 6a over the extension length of the narrow-diameter portion 6a, is 0.2 mm² to 20 mm², and the diameter W2 of the wide-diameter portion 6b is 1.4 or more times the diameter W1 of the narrow-diameter portion 6a in the cross-section perpendicular to the extending direction of the narrow-diameter portion 6a. This can sufficiently improve the aforementioned water absorption and storage performance. That is, if the aforementioned average cross-sectional area is less than 0.2 mm², the effect of the viscous resistance of the wall surface of the narrow-diameter portion 6a becomes relatively large, preventing sufficient water absorption, whereas if the aforementioned average cross-sectional area is more than 20 mm², the narrow-diameter portion 6a becomes blocked by deformation during rolling of the tire, and the flow channel tends to collapse, preventing sufficient water absorption. If the diameter W2 of the wide-diameter portion 6b is less than 1.4 times the diameter W1 of the narrow-diameter portion 6a in the cross-section perpendicular to the extending direction of the narrow-diameter portion 6a, the effect of storing water absorbed by the narrow-diameter portion 6a cannot be sufficiently obtained.

Furthermore, in the aforementioned reference state in the present embodiment, the water absorption holes 6 extend at an inclination relative to the normal direction of the tread surface 1. This makes it easier for the wide-diameter portion 6b to be crushed by pressure from the road surface, facilitating achievement of the aforementioned effect of absorbing water like a dropper.

In a transparent plan view from the tread surface 1 side in the aforementioned reference state, the opening of the narrow-diameter portion 6a to the tread surface 1 overlaps the wide-diameter portion 6b. This can sufficiently achieve the aforementioned effect of absorption and storage. For example, in the case of shortening the extension length of the narrow-diameter portion 6a so that the opening of the narrow-diameter portion 6a to the tread surface 1 overlaps the wide-diameter portion 6b, the distance over which the viscous resistance of the wall surface is received can be shortened, and the aforementioned effects of water absorption and storage can be sufficiently achieved. For example, in the case of reducing the inclination angle of the narrow-diameter portion 6a relative to the normal direction of the tread surface 1 to some degree so that the opening of the narrow-diameter portion 6a to the tread surface 1 overlaps the wide-diameter portion 6b, an increase in the viscous resistance of the wall surface due to collapse at the position of connection between the narrow-diameter portion 6a and the wide-diameter portion 6b can be suppressed, and the aforementioned effects of water absorption and storage can be sufficiently achieved.

According to the pneumatic tire of the present embodiment, the drainage performance on wet road surfaces can thus be improved.

Furthermore, in the present embodiment, the water absorption holes 6 are inclined in the tire circumferential direction from the tread surface 1 side towards the hole bottom side. As a result, the drainage performance on wet road surfaces can be further improved.

For example, when the pneumatic tire is mounted on a vehicle, the water absorption hole 6 is preferably inclined towards the kicking-out side from the tread surface 1 side towards the hole bottom side. In this case, the timing at which the wide-diameter portion 6b collapses during ground contact is delayed, so that water in the contact patch can easily flow to the wide-diameter portion 6b, and water can easily be stored in the wide-diameter portion 6b. This further improves the drainage performance on wet road surfaces.

For example, when the pneumatic tire is mounted on a vehicle, the water absorption hole 6 is also preferably inclined towards the stepping-in side from the tread surface 1 side towards the hole bottom side. In this case, the timing at which the collapsed wide-diameter portion 6b opens up is accelerated, which can improve the effect of absorbing water from the contact patch and further improve the drainage performance on wet road surfaces.

In the present embodiment, the narrow-diameter portion 6a is columnar and has a circular or elliptical cross-section (circular in the present example) perpendicular to the extending direction of the narrow-diameter portion 6a. This reduces the viscous resistance of the wall surface at the narrow-diameter portion 6a, thereby further improving the drainage performance on wet road surfaces.

In the present embodiment, the wide-diameter portion 6b is spherical (a sphere in the present example). This makes it easier for water to be stored in the wide-diameter portion 6b (for example, because the viscous resistance of the wall surface is reduced compared to a wall surface shaped with angular portions), thereby further improving the drainage performance on wet road surfaces.

FIG. 3 is a plan view of a water absorption hole in another example viewed from the tread surface side (upper view) and a tread circumferential cross-sectional view of a water absorption hole in the other example (lower view). In the upper view of FIG. 3, the opening of a narrow-diameter portion 6a (solid line) and a projected line of the outline of a wide-diameter portion 6b (dashed line) are indicated for the sake of explanation.

The water absorption hole 6 according to another example illustrated in FIG. 3 differs from the water absorption hole 6 in the example illustrated in FIG. 2 in that, in a transparent plan view from the tread surface 1 side in the aforementioned reference state, the opening of the narrow-diameter portion 6a to the tread surface 1 overlaps the wide-diameter portion 6b, but is in contact without any overlapping width (is externally tangent).

The same effects as above can be achieved in a tire having one or more of the water absorption holes 6 illustrated in FIG. 3 in the tread surface 1.

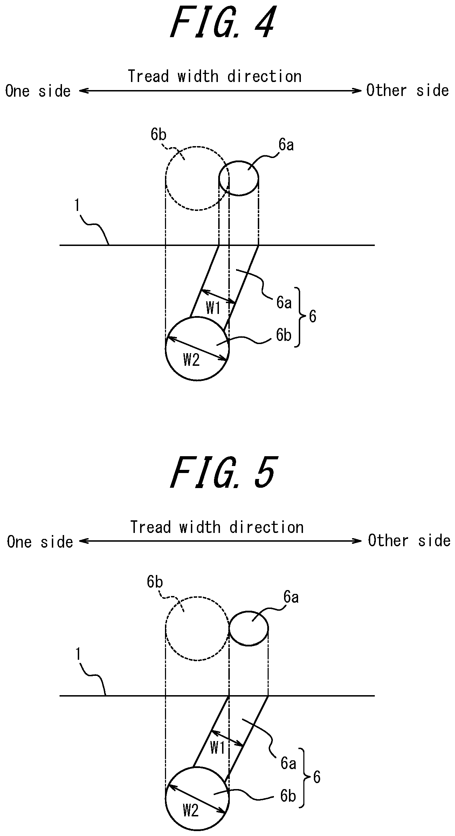

FIG. 4 is a plan view of a water absorption hole in a further example viewed from the tread surface side (upper view) and a tread width cross-sectional view of a water absorption hole in the further example (lower view). In the upper view of FIG. 4, the opening of a narrow-diameter portion 6a (solid line) and a projected line of the outline of a wide-diameter portion 6b (dashed line) are indicated for the sake of explanation.

The water absorption holes 6 according to the further example illustrated in FIG. 4 are inclined in the tire width direction from the tread surface 1 side towards the hole bottom side. As a result, the same effects as the example illustrated in FIG. 2 (except for the effect of being inclined in the circumferential direction) can be achieved, while also further improving the drainage performance on wet road surfaces during cornering.

For example, when the pneumatic tire is mounted on a vehicle, the water absorption hole 6 is preferably inclined towards the outside of the vehicle from the tread surface 1 side towards the hole bottom side. After mounting, the wide-diameter portion 6b is consequently located towards the outside of the vehicle, where the ground contact pressure is large. This increases the collapsing, thereby enhancing the dropper effect and improving the water absorption effect. Therefore, the water absorption effect can be improved during cornering, and the drainage performance on wet road surfaces can be further improved.

For example, when the pneumatic tire is mounted on a vehicle, the water absorption hole 6 is also preferably inclined towards the inside of the vehicle from the tread surface 1 side towards the hole bottom side. After mounting, the ground contact length is shorter towards the inside of the vehicle, which delays the timing at which the wide-diameter portion 6b collapses during ground contact, so that water in the contact patch can easily flow to the wide-diameter portion 6b, and water can easily be stored in the wide-diameter portion 6b. This further improves the drainage performance on wet road surfaces.

FIG. 5 is a plan view of a water absorption hole in an additional example viewed from the tread surface side (upper view) and a tread width cross-sectional view of a water absorption hole in the additional example (lower view). In the upper view of FIG. 5, the opening of a narrow-diameter portion 6a (solid line) and a projected line of the outline of a wide-diameter portion 6b (dashed line) are indicated for the sake of explanation.

The water absorption hole 6 according to the additional example illustrated in FIG. 5 differs from the water absorption hole 6 in the example illustrated in FIG. 4 in that, in a transparent plan view from the tread surface 1 side in the aforementioned reference state, the opening of the narrow-diameter portion 6a to the tread surface 1 overlaps the wide-diameter portion 6b, but is in contact without any overlapping width (is externally tangent).

The same effects as in the case of FIG. 4 can be achieved in a tire having one or more of the water absorption holes 6 illustrated in FIG. 5 in the tread surface 1.

The tensile stress of the tread rubber used for the tread surface 1 at 100% elongation is preferably in the range of 0.5 MPa to 20 MPa. In this range, the aforementioned effect of the shrinking and restoration of the water absorption holes 6 can be sufficiently achieved.

As illustrated in FIGS. 2 and 3, the water absorption hole is preferably inclined in the tire circumferential direction from the tread surface side towards the hole bottom side. The reason is that the drainage performance on wet road surfaces can be further improved. In this case, when the pneumatic tire is mounted on a vehicle, the water absorption hole is preferably inclined towards the kicking-out side from the tread surface side towards the hole bottom side. The reason is that water can easily be stored in the wide-diameter portion, further improving the drainage performance on wet road surfaces. Alternatively, when the pneumatic tire is mounted on a vehicle, the water absorption hole is also preferably inclined towards the stepping-in side from the tread surface side towards the hole bottom side. The reason is that water absorption effect can be improved, further improving the drainage performance on wet road surfaces.

Alternatively, as illustrated in FIGS. 4 and 5, the water absorption hole is also preferably inclined in the tire width direction from the tread surface side towards the hole bottom side. The reason is that the drainage performance on wet road surfaces can be further improved during cornering. In this case, when the pneumatic tire is mounted on a vehicle, the water absorption hole is preferably inclined towards the outside of the vehicle from the tread surface side towards the hole bottom side. The reason is that after mounting, the wide-diameter portion is located towards the outside of the vehicle, where the ground contact pressure is large. This increases the collapsing, thereby enhancing the dropper effect and improving the water absorption effect. Alternatively, when the pneumatic tire is mounted on a vehicle, the water absorption hole is preferably inclined towards the inside of the vehicle from the tread surface side towards the hole bottom side. The reason is that after mounting, the ground contact length is shorter towards the inside of the vehicle, which delays the timing at which the wide-diameter portion 6b collapses during ground contact, so that water in the contact patch can easily flow to the wide-diameter portion 6b, and water can easily be stored in the wide-diameter portion 6b. This further improves the drainage performance on wet road surfaces.

In each of the above examples, the narrow-diameter portion is preferably columnar and preferably has a circular or elliptical shape in a cross-section perpendicular to the extending direction of the narrow-diameter portion. The reason is that the viscous resistance of the wall surface at the narrow-diameter portion can be reduced, thereby further improving the drainage performance on wet road surfaces.

In each of the above examples, the wide-diameter portion is preferably spherical. The reason is that water can easily be stored in the wide-diameter portion, even further improving the drainage performance on wet road surfaces.

While some embodiments of the present invention have been described above, the present invention is not limited to the above embodiments, but only to the appended claims. For example, in each of the above examples, the one or more water absorption holes provided on the tread surface are all inclined and extend in the same direction relative to the normal direction of the tread surface, but the direction of inclination can be varied. Alternatively, the water absorption holes may be inclined in the same direction but at different inclination angles.

### REFERENCE SIGNS LIST

- 1: Tread surface
- 2: Circumferential main groove
- 3: Land portion
- 4: Widthwise groove
- 5: Block
- 6: Water absorption hole
- 6a: Narrow-diameter portion
- 6b: Wide-diameter portion
- CL: Tire equatorial plane
- TE: Tread edge

## Claims

1. A pneumatic tire comprising at least one water absorption hole (6) on a tread surface (1), wherein
the water absorption hole (6) includes a narrow-diameter portion (6a) located on the tread surface side and a wide-diameter portion (6b) that is located on a hole bottom side and has a diameter (W2) larger than a diameter (W 1) of the narrow-diameter portion (6a),
in a reference state such that the pneumatic tire is mounted on an applicable rim, filled to a prescribed internal pressure, and under no load, the water absorption hole (6) extends at an inclination relative to a normal direction of the tread surface (1), and
in the reference state, an average cross-sectional area, which is an average value of a cross-sectional area of the narrow-diameter portion (6a) in a cross-section perpendicular to an extending direction of the narrow-diameter portion (6a) over an extension length of the narrow-diameter portion (6a), is 0.2 mm² to 20 mm², and **characterised in that** a diameter (W2) of the wide-diameter portion (6b) is 1.4 or more times a diameter (W1) of the narrow-diameter portion (6a) in the cross-section perpendicular to the extending direction of the narrow-diameter portion (6a), and
in a transparent plan view from the tread surface side in the reference state, an opening of the narrow-diameter portion (6a) to the tread surface (1) overlaps the wide-diameter portion (6b), wherein "overlaps" includes the case of being in contact.

2. The pneumatic tire of claim 1, wherein the water absorption hole (6) is inclined in a tire circumferential direction from the tread surface side towards the hole bottom side.

3. The pneumatic tire of claim 2, wherein when the pneumatic tire is mounted on a vehicle, the water absorption hole (6) is inclined towards a kicking-out side from the tread surface side towards the hole bottom side.

4. The pneumatic tire of claim 2, wherein when the pneumatic tire is mounted on a vehicle, the water absorption hole (6) is inclined towards a stepping-in side from the tread surface side towards the hole bottom side.

5. The pneumatic tire of any one of claims 1 to 4, wherein the water absorption hole (6) is inclined in a tire width direction from the tread surface side towards the hole bottom side.

6. The pneumatic tire of claim 5, wherein when the pneumatic tire is mounted on a vehicle, the water absorption hole (6) is inclined towards an outside of the vehicle from the tread surface side towards the hole bottom side.

7. The pneumatic tire of claim 5, wherein when the pneumatic tire is mounted on a vehicle, the water absorption hole (6) is inclined towards an inside of the vehicle from the tread surface side towards the hole bottom side.

8. The pneumatic tire of any one of claims 1 to 7, wherein the narrow-diameter portion (6a) is columnar, and the cross-section perpendicular to the extending direction of the narrow-diameter portion (6a) is circular or elliptical.

9. The pneumatic tire of any one of claims 1 to 8, wherein the wide-diameter portion (6b) is spherical.

## Patentansprüche

1. Luftreifen, der mindestens ein Wasserabsorptionsloch (6) auf einer Lauffläche (1) umfasst, wobei
das Wasserabsorptionsloch (6) einen Abschnitt mit schmalem Durchmesser (6a), der sich auf der Laufflächenseite befindet, und einen Abschnitt mit breitem Durchmesser (6b), der sich auf einer Lochbodenseite befindet und einen Durchmesser (W2) aufweist, der größer als ein Durchmesser (W1) des Abschnitts mit schmalem Durchmesser (6a) ist, einschließt,
in einem Referenzzustand derart, dass der Luftreifen auf einer zulässigen Felge montiert, bis zu einem vorgeschriebenen Innendruck gefüllt und unter keiner Last ist, sich das Wasserabsorptionsloch (6) mit einer Neigung im Verhältnis zu einer normalen Richtung der Lauffläche (1) erstreckt, und
in dem Referenzzustand eine durchschnittliche Querschnittsfläche, die ein Durchschnittswert einer Querschnittsfläche des Abschnitts mit schmalem Durchmesser (6a) in einem Querschnitt senkrecht zu einer Ausdehnungsrichtung des Abschnitts mit schmalem Durchmesser (6a) über eine Ausdehnungslänge des Abschnitts mit schmalem Durchmesser (6a) ist, 0,2 mm² bis 20 mm² beträgt, und **dadurch gekennzeichnet, dass** ein Durchmesser (W2) des Abschnitts mit breitem Durchmesser (6b) das 1,4-Fache oder mehr eines Durchmessers (W1) des Abschnitts mit schmalem Durchmesser (6a) in dem Querschnitt senkrecht zu der Ausdehnungsrichtung des Abschnitts mit schmalem Durchmesser (6a) beträgt, und
in einer transparenten Draufsicht von der Laufflächenseite in dem Referenzzustand eine Öffnung des Abschnitts mit schmalem Durchmesser (6a) zu der Lauffläche (1) den Abschnitt mit breitem Durchmesser (6b) überlappt, wobei "überlappt" den Fall einschließt, sich in Kontakt zu befinden.

2. Luftreifen nach Anspruch 1, wobei das Wasserabsorptionsloch (6) in einer Reifenumfangsrichtung von der Laufflächenseite hin zu der Lochbodenseite geneigt ist.

3. Luftreifen nach Anspruch 2, wobei, wenn der Luftreifen an einem Fahrzeug montiert ist, das Wasserabsorptionsloch (6) hin zu einer Seite der letzten Ablösung von der Laufflächenseite hin zu der Lochbodenseite geneigt ist.

4. Luftreifen nach Anspruch 2, wobei, wenn der Luftreifen an einem Fahrzeug montiert ist, das Wasserabsorptionsloch (6) hin zu einer Seite der ersten Berührung von der Laufflächenseite hin zu der Lochbodenseite geneigt ist.

5. Luftreifen nach einem der Ansprüche 1 bis 4, wobei das Wasserabsorptionsloch (6) in einer Reifenbreitenrichtung von der Laufflächenseite hin zu der Lochbodenseite geneigt ist.

6. Luftreifen nach Anspruch 5, wobei, wenn der Luftreifen an einem Fahrzeug montiert ist, das Wasserabsorptionsloch (6) hin zu einer Außenseite des Fahrzeugs von der Laufflächenseite hin zu der Lochbodenseite geneigt ist.

7. Luftreifen nach Anspruch 5, wobei, wenn der Luftreifen an einem Fahrzeug montiert ist, das Wasserabsorptionsloch (6) hin zu einer Innenseite des Fahrzeugs von der Laufflächenseite hin zu der Lochbodenseite geneigt ist.

8. Luftreifen nach einem der Ansprüche 1 bis 7, wobei der Abschnitt mit schmalem Durchmesser (6a) säulenförmig ist, und der Querschnitt senkrecht zu der Ausdehnungsrichtung des Abschnitts mit schmalem Durchmesser (6a) kreisförmig oder elliptisch ist.

9. Luftreifen nach einem der Ansprüche 1 bis 8, wobei der Abschnitt mit breitem Durchmesser (6b) kugelförmig ist.

## Revendications

1. Bandage pneumatique, comprenant au moins un trou à absorption d'eau (6) sur une surface de bande de roulement (1), dans lequel
le trou à absorption d'eau (6) inclut une partie à diamètre étroit (6a) située sur le côté de la surface de bande de roulement, et une partie à large diamètre (6b) qui est située sur un côté du fond du trou et a un diamètre (W2) supérieur à un diamètre (W1) de la partie à diamètre étroit (6a),
dans un état de référence, de sorte que le bandage pneumatique est monté sur une jante applicable, rempli à une pression interne prescrite et sans application de charge, le trou à absorption d'eau (6) s'étend à une inclinaison par rapport à une direction normale de la surface de bande de roulement (1), et
dans l'état de référence, une surface de section transversale moyenne, constituant une valeur moyenne d'une surface de section transversale de la partie à diamètre étroit (6a), dans une section transversale perpendiculaire à une direction d'extension de la partie à diamètre étroit (6a), sur une longueur d'extension de la partie à diamètre étroit (6a), est comprise entre 0,2 mm² et 20 mm², et **caractérisé en ce qu'**un diamètre (W2) de la partie à large diamètre (6b) vaut 1,4 fois ou plus un diamètre (W1) de la partie à diamètre étroit (6a), dans la section transversale perpendiculaire à la direction d'extension de la partie à diamètre étroit (6a), et
dans une vue en plan transparente du côté de la surface de bande de roulement dans l'état de référence, une ouverture de la partie à diamètre étroit (6a) vers la surface de bande de roulement (1) chevauche la partie à large diamètre (6b), dans lequel le terme « chevauche » inclut le cas de l'établissement d'un contact.

2. Bandage pneumatique selon la revendication 1, dans lequel le trou à absorption d'eau (6) est incliné dans une direction circonférentielle du pneumatique, du côté de la surface de bande de roulement vers le côté du fond du trou.

3. Bandage pneumatique selon la revendication 2, dans lequel, lorsque le bandage pneumatique est monté sur un véhicule, le trou à absorption d'eau (6) est incliné vers un côté de dernier dégagement, du côté de la surface de bande de roulement vers le côté du fond du trou.

4. Bandage pneumatique selon la revendication 2, dans lequel, lorsque le bandage pneumatique est monté sur un véhicule, le trou à absorption d'eau (6) est incliné vers un côté de premier contact, du côté de la surface de bande de roulement vers le côté du fond du trou.

5. Bandage pneumatique selon l'une quelconque des revendications 1 à 4, dans lequel le trou à absorption d'eau (6) est incliné, dans une direction de la largeur du pneumatique, du côté de la surface de bande de roulement vers le côté du fond du trou.

6. Bandage pneumatique selon la revendication 5, dans lequel, lorsque le bandage pneumatique est monté sur un véhicule, le trou à absorption d'eau (6) est incliné vers un extérieur du véhicule, du côté de la surface de bande de roulement vers le côté du fond du trou.

7. Bandage pneumatique selon a revendication 5, dans lequel, lorsque le bandage pneumatique est monté sur un véhicule, le trou à absorption d'eau (6) est incliné vers l'intérieur du véhicule, du côté de la surface de bande de roulement vers le côté du fond du trou.

8. Bandage pneumatique selon l'une quelconque des revendications 1 à 7, dans lequel la partie à diamètre étroit (6a) a une forme en colonne, et la section transversale perpendiculaire à la direction d'extension de la partie à diamètre étroit (6a) est circulaire ou elliptique.

9. Bandage pneumatique selon l'une quelconque des revendications 1 à 8, dans lequel la partie à large diamètre (6b) est sphérique.
